# EUROPEAN PATENT SPECIFICATION

(11) **EP 4 444 801 B1**
(45) Date of publication and mention of the grant of the patent: **19.11.2025**
(21) Application number: 22818932.0
(22) Date of filing: 17.10.2022
(51) Int. Cl.: C08L 83/04, C08J 3/24

(54) **LOW TEMPERATURE FAST CURE DUAL CURE SILICONES**
BEI NIEDRIGER TEMPERATUR SCHNELLHÄRTENDE ZWEIFACHHÄRTENDE SILIKONE
SILICONES À DOUBLE DURCISSEMENT À DURCISSEMENT RAPIDE À BASSE TEMPÉRATURE

(30) Priority: 08.12.2021 US 202163287214 P
(43) Date of publication of application: 16.10.2024
(73) Proprietor: Dow Silicones Corporation, Midland, MI 48686-0994 (US)
(72) Inventor: LIU, Junying, Auburn, Michigan 48611 (US); ZHU, Bizhong, Midland, Michigan 48686-0994 (US)
(74) Representative: Murgitroyd & Company
(86) International application number: PCT/US2022/046849
(87) International publication number: WO 2023/107198

(56) References cited:
- WO-A1-2020/076620
- WO-A1-2021/026054
- US-A1- 2021 139 703

## Description

### Field of the Invention

The present invention relates to dual cure compositions that cure by both ultraviolet light and moisture.

### Introduction

Dual cure compositions that cure by both ultraviolet (UV) light and moisture are useful, for example, in coating, encapsulation, potting and adhesive applications where exposure of all portions of a coating to light is difficult yet rapid curing of the coating is desirable. The UV light curing aspect of the composition provides for a rapid initial curing of the composition by UV light exposure to facilitate continued process or handling without damage to the coating. The moisture cure mechanism serves to cure composition blocked from exposure to light ("shadow areas") as well as cure the composition more completely over time.

A challenge with many dual cure compositions is that they require expensive "dual cure" polymers that comprise both moisture and UV cure functionalities on the same polymer. These polymers are not only expensive to make but they are limited in their structural configurations so as to enable both moisture and UV curing functionality on the same polymer. It is desirable to identify a dual cure composition that does not require dual cure polymers. A "dual cure polymer" is a polymer that contains both UV curable and a moisture curable functional groups. An example of a dual cure polymer is one that contains both alkoxy and alkenyl functional groups. WO 2020/076620 A1 discloses a dual curable organopolysiloxane composition. The composition comprises: (A) a first organopolysiloxane having at least two mercapto (-SH) functional groups per molecule and free of an alkenyl group; (B) a second organopolysiloxane having at least one alkenyl group and at least one silicon atom-bonded alkoxy group per molecule; (C) optionally an organopolysiloxane having at least two alkenyl groups per molecule and free of silicon atom-bonded alkoxy group; (D) a photo-initiator; (E) a condensation catalyst; and (F) an epoxy functional compound. The composition has the ability to both photo-cure and cure through exposure to moisture, and exhibits good to excellent curability and long-term storage stability.

Another desirable feature for dual cure composition is to increase the rate and extent of the moisture cure step so as to more rapidly complete curing of the composition. For instance, it is desirable to achieve a moisture curing of a composition to a tack-free surface in less than 50 minutes. More importantly is to achieve such a moisture curing rate while also achieving a UV cure upon a 4 Joules per square centimeter (J/cm²) UV exposure in air that is tack-free and cured to a depth of at least one millimeter. Even more desirable is such a dual cure composition that achieves these composition and performance characteristics using a thiol-ene UV cure chemistry so as to avoid problems with (meth)acrylate-based UV cure systems.

### BRIEF SUMMARY OF THE INVENTION

The present invention provides a solution to the problem of simultaneously providing a dual cure composition that does not require a dual cure polymer and that achieves moisture cure to a tack-free surface in less than 50 minutes, a UV cure upon 4 J/cm² UV irradiation in air that is tack-free and cured to a depth of at least one millimeter and that utilized a thiol-ene UV cure chemistry.

Surprisingly, the present invention is a result of discovering a composition of three different organopolysiloxanes: an alkenyl-functional, a mercapto-functional and a trialkoxy-functional organopolysiloxane that are capable of achieving the aforementioned desired dual cure performance. Key to the moisture cure performance is use of trialkoxy-functional polysiloxanes instead of the more typical di-alkoxy functional polysiloxanes used in dual cure compositions to achieve a more rapid moisture cure.

In a first aspect, the present invention is a curable composition comprising: (a) a first organopolysiloxane comprising at least two trialkoxysilyl groups per molecule and that is free of alkenyl groups and mercapto groups, the first organopolysiloxane present at a concentration in a range of 35 to 80 weight-percent based on a combined weight of first, second and third organopolysiloxanes; (b) a second organopolysiloxane containing at least one alkenyl group and that is free of mercapto groups and alkoxysilyl groups, where the second organopolysiloxane is present at a concentration in a range of 10 to 65 weight-percent and provides a concentration of double bonded carbon groups of more than 0.02 weight-percent, with weight-percent values based on a combined weight of first, second and third organopolysiloxanes; (c) a third organopolysiloxane comprising on average 2 or more mercapto groups per molecule and that is free of alkenyl functionality and alkoxysilyl functionality, wherein the concentration of the third organopolysiloxane is present at a concentration that is both in a range of 0.5 to 30 weight-percent based on a combined weight of first, second and third organopolysiloxanes and that is sufficient to provide 0.3 to 4 moles of mercapto groups per mole of alkenyl groups; (d) a photoinitiator at a concentration in a range of 0.01 to 5 weight-percent of curable composition weight; (e) a condensation catalyst at a concentration in a range of 0.01 to 3 weight-percent of curable composition weight; and (f) optionally, alkoxy silane at a concentration in a range of 0.1 to 10 weight-percent of curable composition weight.

Notably, the curable composition can be free of polymers containing both alkoxy and alkenyl functional groups and can be free of dual cure polymers altogether.

The composition of the present invention is useful, for example, as a dual cure composition in coating, encapsulation, potting and adhesive applications where exposure of all portions of a coating to light is difficult yet rapid curing of the coating is desirable.

### DETAILED DESCRIPTION OF THE INVENTION

Test methods refer to the most recent test method as of the priority date of this document when a date is not indicated with the test method number. References to test methods contain both a reference to the testing society and the test method number. The following test method abbreviations and identifiers apply herein: ASTM refers to ASTM International methods; EN refers to European Norm; DIN refers to Deutsches Institut für Normung; ISO refers to International Organization for Standards; and UL refers to Underwriters Laboratory.

Products identified by their tradename refer to the compositions available under those tradenames on the priority date of this document.

"Multiple" means two or more. "And/or" means "and, or as an alternative". All ranges include endpoints unless otherwise indicated.

"(Meth)acryl groups" include CH₂=CA-COO- groups as well as -CH₂-CA-COOA groups, where A is independently in each occurrence selected from hydrogen and hydrocarbyl groups.

Chemical structures and compositions for polymers indicate the average chemical composition for a polymer and, unless otherwise stated, include any configuration of the polymer units specified including random polymers, block copolymers and combinations thereof.

The present invention is a curable composition. That means it is capable of undergoing a crosslinking reaction between components in the composition. The present invention is actually a dual cure curable composition that is capable of undergoing both ultraviolet (UV) light initiated curing as well as moisture curing.

The curable composition comprises three organopolysiloxane: a first organopolysiloxane, a second organopolysiloxane, and a third organopolysiloxane.

The first organopolysiloxane comprises at least two trialkoxysilyl groups per molecule and that is free of alkenyl groups and mercapto groups. The first organopolysiloxane can be free of (meth)acryl groups. The first organopolysiloxane can contain more than two trialkoxysilyl groups per molecule. The trialkoxy silyl groups are groups that contain an (RO)₃Si- functionality where R is independently in each occurrence selected from hydrocarbon groups, preferably from hydrocarbon groups having an average of one to 8 carbon atoms, more preferably R is methyl.

The first organopolysiloxane can be one or any combination of more than one organopolysiloxane having a chemical composition (I):

[XR₂SiO_{1/2}]ₘ[R₂SiO_{2/2}]_{d}[RXSiO_{2/2}]_{d'} [RSiO_{3/2}]ₜ[SiO_{4/2}]_{q} (I)

where:
X is independently in each occurrence selected from trialkoxy silyl containing groups such as -Si(OR)₃ and -R'-SiR₂-OSiR₂-R'-Si(OR)₃;
R is independently in each occurrence selected from hydrocarbyl groups containing one or more, even 2 or more, 3 or more, 4 or more, even 5 or more while at the same time 6 or fewer, 5 or fewer, 4 or fewer, 3 or fewer, even two or fewer carbon atoms; preferably R is methyl in each occurrence;
R' is a an alkylene group having one or more, and can have 2 or more, 3 or more 4 or more, even 5 or more while at the same time 6 or fewer, 5 or fewer, 4 or fewer, 3 or fewer, even two or fewer carbon atoms; preferably R' is -CH₂CH₂-;
Subscript m has an average value of 2 or more and can be 3 or more, 4 or more, 5 or more, 6 or more, 7 or more, 8 or more, even 9 or more and at the same time is typically 10 or less, 9 or less, 8 or less, 7 or less, 6 or less, 5 or less, 4 or less, or even 3 or less;
Subscript d has an average value of 20 or more, and can be 40 or more, 60 or more, 80 or more, 100 or more, 150 or more, 250 or more, 500 or more, 1000 or more, 2000 or more, 3000 or more, even 4000 or more while at the same time is typically, 5000 or less, 400 or less, 3000 or less, 2000 or less, 1000 or less, 500 or less, 400 or less, 300 or less, 200 or less, 100 or less, 80 or less, 60 or less, 40 or less, even 30 or less;
Subscript d' has an average value of zero or more, and can be one or more, 2 or more, 3 or more, 4 or more, 5 or more, 6 or more, 7 or more, 8 or more, 9 or more, 10 or more, 15 or more, 20 or more, 30 or more, even 40 or more while at the same time is typically 50 or less, 40 or less, 30 or less, 20 or less, 10 or less, or even 5 or less;
Subscript t has an average value of zero or more, and can be one or more, 2 or more, 3 or more 4 or more, 5 or more, 10 or more, 20 or more, 30 or more, 40 or more, 50 or more, 60 or more, 70 or more, 80 or more, even 90 or more while at the same time is typically 100 or less, and can be 90 or less, 80 or less, 70 or less, 60 or less, 50 or less, 40 or less, 30 or less, 20 or less, or even 10 or less; and
Subscript q has an average value of zero or more, and can be one or more, 2 or more, 3 or more, 4 or more, 5 or more, 6 or more, 7 or more, 8 or more, even 9 or more, while at the same time is typically 10 or less, 9 or less, 8 or less, 7 or less, 6 or less, 5 or less, 4 or less, 3 or less, 2 or less, or even one or less.

The first organopolysiloxane can be an organopolysiloxane having an average chemical structure (Ia) or (Ib), or can be a combination of organopolysiloxanes having average chemical structures (Ia) and (Ib):

X-R₂SiO-[R₂SiO]ₐ-[RXSiO]_{b}-R₂Si-X (Ia)

Si[O-[R₂SiO]ₐ-[RXSiO]_{b}-R₂Si-X]₄ (Ib)

where:
X and R are as defined herein above, ;
subscript a has an average value of 20 or more and can be 40 or more, 50 or more, 55 or more, 60 or more, 80 or more 100 or more, 145 or more, 150 or more, 200 or more, 300 or more, 400 or more, 500 or more, 1000 or more, 2000 or more, even 3000 or more while at the same time is typically 5000 or less, and can be 4000 or less, 3000 or less, 2000 or less, 1000 or less, 500 or less, 400 or less, 300 or less, 290 or less, 250 or less, 200 or less, 150 or less, 100 or less; 80 or less, 60 or less, even 57 or less; and
subscript b has an average value of zero or more, one or more, 2 or more, 3 or more, 4 or more, 5 or more, 6 or more, 7 or more, 8 or more, 9 or more, 10 or more, 20 or more, 30 or more, even 40 or more while at the same time typically has a value of 50 or less, and can be 40 or less, 30 or less, 20 or less, even 10 or less.

The concentration of first organopolysiloxane is 35 weight-percent (wt%) or more and can be 40 wt% or more, 45 wt% or more, 50 wt% or more, 55 wt% or more, 60 wt% or more, 65 wt% or more, 70 wt% or more, even 75 wt% or more while at the same time is typically 80 wt% or less, and can be 75 wt% or less, 70 wt% or less, 65 wt% or less, 60 wt% or less, 55 wt% or less, 50 wt% or less, 45 wt% or less, 40 wt% or less, or even 35 wt% or less relative to the combined weight of first, second and third organopolysiloxanes.

The second organopolysiloxane comprises at least one alkenyl group, preferably two or more alkenyl groups per molecule and is free of mercapto groups and alkoxysilyl groups. Desirably, the alkenyl group is a terminal alkenyl, which means it has a carbon-carbon double bond (C=C) between the two carbons most remote from where it is connected to the polysiloxane backbone. Preferably, the alkenyl group is a vinyl (-CH=CH₂) group.

The second organopolysiloxane can be one or any combination of more than one organopolysiloxane having a chemical composition (II):

[YR₂SiO_{1/2}]_{m'}[R₂SiO_{2/2}]_{d2}[RYSiO_{2/2}]_{d2'}[RSiO_{3/2}]_{t'}[SiO_{4/2}]_{q'} (II)

where:
Y is independently in each occurrence a terminal alkenyl group having from 2 to 8 carbon atoms and can have 2 or more, 3 or more, 4 or more, 5 or more, 6 or more, even 7 or more while at the same time typically contains 8 or fewer, and can contain 7 or fewer, 6 or fewer, 5 or fewer, 4 or fewer, even 3 or fewer carbon atoms; Y can be a vinyl group in each occurrence;
R is independently in each occurrence selected from hydrocarbyl groups containing one or more, even 2 or more, 3 or more, 4 or more, even 5 or more while at the same time 6 or fewer, 5 or fewer, 4 or fewer, 3 or fewer, even two or fewer carbon atoms; preferably R is methyl in each occurrence;
Subscript m' has an average value of 2 or more and can be 3 or more, 4 or more, 5 or more, 6 or more, 7 or more, 8 or more, even 9 or more and at the same time is typically 10 or less, 9 or less, 8 or less, 7 or less, 6 or less, 5 or less, 4 or less, or even 3 or less;
Subscript d2 has an average value of 20 or more, and can be 40 or more, 60 or more, 80 or more, 100 or more, 150 or more, 250 or more, 500 or more, 1000 or more, 2000 or more, 3000 or more, even 4000 or more while at the same time is typically, 5000 or less, 400 or less, 3000 or less, 2000 or less, 1000 or less, 500 or less, 400 or less, 300 or less, 200 or less, 100 or less, 80 or less, 60 or less, 40 or less, even 30 or less;
Subscript d2' has an average value of zero or more, and can be one or more, 2 or more, 3 or more, 4 or more, 5 or more, 6 or more, 7 or more, 8 or more, 9 or more, 10 or more, 15 or more, 20 or more, 30 or more, even 40 or more while at the same time is typically 50 or less, 40 or less, 30 or less, 20 or less, 10 or less, or even 5 or less;
Subscript t' has an average value of zero or more, and can be one or more, 2 or more, 3 or more 4 or more, 5 or more, 10 or more, 20 or more, 30 or more, 40 or more, 50 or more, 60 or more, 70 or more, 80 or more, even 90 or more while at the same time is typically 100 or less, and can be 90 or less, 80 or less, 70 or less, 60 or less, 50 or less, 40 or less, 30 or less, 20 or less, or even 10 or less; and
Subscript q' has an average value of zero or more, and can be one or more, 2 or more, 3 or more, 4 or more, 5 or more, 6 or more, 7 or more, 8 or more, even 9 or more, while at the same time is typically 10 or less, 9 or less, 8 or less, 7 or less, 6 or less, 5 or less, 4 or less, 3 or less, 2 or less, or even one or less.

The second organopolysiloxane can be or include one or any combination or more than one organopolysiloxane selected from those having an average chemical structure (IIa) or (IIb):

Y-R₂SiO-[R₂SiO]ₘ-[YRSiO]ₙ-R₂SiY (IIa)

Si[-O-[R₂SiO]ₘ-[YRSiO]ₙ- R₂SiY]₄ (IIb)

where:
Y is independently in each occurrence a terminal alkenyl group having from 2 to 8 carbon atoms and can have 2 or more, 3 or more, 4 or more, 5 or more, 6 or more, even 7 or more while at the same time typically contains 8 or fewer, and can contain 7 or fewer, 6 or fewer, 5 or fewer, 4 or fewer, even 3 or fewer carbon atoms; Y can be a vinyl group in each occurrence;
R is independently in each occurrence selected from hydrocarbyl groups having one to 6 carbon atoms and can have one or more, 2 or more, 3 or more, 4 or more, even 5 or more while at the same time typically contains 6 or fewer, and can contain 5 or fewer, 4 or fewer, 3 or fewer, even 2 or fewer carbon atoms; R can be methyl in each occurrence;
subscript m has an average value in a range of 20 to 5000, and can be 20 or more, 40 or more, 50 or more, 55 or more, 75 or more 100 or more, 120 or more, 200 or more, 250 or more, 500 or more, 1000 or more, 1500 or more, 2000 or more, 2500 or more, even 3000 or more while at the same time is typically 5000 or less, 4000 or less, 3000 or less, 2000 or less, 1000 or less, 900 or less, 800 or less, 770 or less, 700 or less, 600 or less, 500 or less, 250 or less, 100 or less, 75 or less, 60 or less, 57 or less, or even 50 or less; and
subscript n has an average value in a range of zero to 20 and can be zero or more, one or more, 2 or more, 3 or more, 4 or more, 5 or more, 6 or more, 7 or more, 8 or more, 9 or more, 10 or more, 11 or more, 12 or more, 13 or more, 14 or more, 15 or more, 16 or more, 17 or more, 18 or more, even 19 or more while at the same time is typically 20 or less, 19 or less, 18 or less, 17 or less, 16 or less, 15 or less, 14 or less, 13 or less, 12 or less, 11 or less, 10 or less, 9 or less, 8 or less, 7 or less, 6 or less, 5 or less, 4 or less, 3 or less, 2 or less, or even one or less.

For example, the second organopolysiloxane can be selected from:

Y-R₂SiO-[R₂SiO]ₘ-[YRSiO]ₙ-R₂SiY (IIa)

where in each occurrence: R is methyl, Y is a vinyl group, subscript m has an average value in a range of 120 to 770, and subscript n zero; and

Si[-O-[R₂SiO]ₘ-[YRSiO]ₙ-R₂SiY]₄ (IIb)

where in each occurrence: R is methyl, Y is a vinyl group, subscript m has an average value in a range of 55 to 57, and subscript n zero

The concentration of second organopolysiloxane is 10 wt% or more and can be 15 wt% or more, 20 wt% or more, 25 wt% or more, 30 wt% or more, 35 wt% or more, 40 wt% or more, 45 wt% or more, 50 wt% or more, 55 wt% or more, even 60 wt% or more while at the same time is typically 65 wt% or less, and can be 60 wt% or less, 55 wt% or less, 50 wt% or less, 45 wt% or less, 40 wt% or less, 35 wt% or less, 30 wt% or less, 25 wt% or less, or even 20 wt% or less relative to the combined weight of first, second and third organopolysiloxanes. At an average of 0.02 wt% or more, or 0.05 wt% or more, 0.10 wt% or more, 0.20 wt% or more, 0.30 wt% or more, 0.40 wt% or more, 0.50 wt% or more, 0.60 wt% or more, 0.70 wt% or more, 0.80 wt% or more, 0.90 wt% or more, 1.0 wt% or more, even 1.5 wt% or more while at the same time typically 3.0 wt% or fewer, even 2.5 wt% or fewer, 2.0 wt% or fewer, 1.5 wt% or fewer, 1.0 wt% or less, 0.5 wt% or fewer, 0.25 wt% or fewer, even 0.10 wt% or fewer double bonded carbon groups (double bonded carbon groups calculated based on a formula of HC=CH) based on the combined weight of first, second and third organopolysiloxanes.

The third organopolysiloxane comprises on average 2 or more mercapto groups (-SH) per molecule and is free of alkenyl and alkoxysilyl functionality. Desirably, the third organopolysiloxane is a linear organopolysiloxane. The third organopolysiloxane can contain terminal mercapto groups and be free of pendant mercapto groups, pendant mercapto groups and be free of terminal mercapto groups, or can contain a combination of terminal and pendant mercapto groups. Desirably, the third organopolysiloxane contains mercapto groups at a concentration in a range of 0.5 to 15.0 weight0percent based on weight of the third organopolysiloxane.

The third organopolysiloxane can have an average chemical composition (III):

[R₃SiO_{1/2}]₂₋ⱼ[R"R₂SiO_{1/2}]ⱼ[RR"SiO_{2/2}]ₒ[R₂SiO_{2/2}]ₚ (III)

where:
R is independently in each occurrence selected from hydrocarbyl groups having one to 6 carbon atoms and can have one or more, 2 or more, 3 or more, 4 or more, even 5 or more while at the same time typically contains 6 or fewer, and can contain 5 or fewer, 4 or fewer, 3 or fewer, even 2 or fewer carbon atoms; R can be methyl in each occurrence;
R" is HS(CH₂)ₜCH₂-
subscript t has an average value of one or more, and can be 2 or more, 3 or more, 4 or more, 5 or more, even 6 or more while at the same time is typically 7 or less, and can be 6 or less, 5 or less, 4 or less, 3 or less, even 2 or less;
subscript j has an average value of 0 or more and can be one or more and at the same time is 2 or less, or even one or less provided that the sum of subscripts j and o have an average value of at least 2;
subscripts o and p are desirably selected so as to provide a weight ratio of mercapto groups that is in a range of 0.5 to 15.0 weight-percent based on weight of the third organopolysiloxane.
Typically, subscript o has an average value of zero or more, and can be one or more, 2 or more, and can be 3 or more, 4 or more, 5 or more, 6 or more, 7 or more, 8 or more, even 9 or more while at the same time is typically 30 or less, 25 or less, 20 or less, 15 or less, 10 or less, and can be 9 or less, 8 or less, 7 or less, 6 or less, 5 or less, 4 or less, 3 or less, even 2 or less; and
Typically subscript p has an average value of 3 or more, 5 or more, 10 or more, 20 or more, 30 or more, 40 or more and can be 41 or more, 42 or more, 43 or more, even 44 or more while at the same time is typically 500 or less, 250 or less, 100 or less, 75 or less, 50 or less, 45 or less, and can be 44 or less, 43 or less, 42 or less, even 41 or less; and

For instance, the third organopolysiloxane can have an average chemical composition (IIIa):

[R₃SiO_{1/2}]₂[RR"SiO_{2/2}]ₒ[R₂SiO_{2/2}]ₚ (IIIa)

where: R is methyl in each occurrence, R" is HS(CH₂)₂CH₂-, subscript p has a value in a range of 40 to 45, and subscript o has an average value of 5.

The concentration of third organopolysiloxane is typically 0.5 wt% or more, and can be 0.6 wt% or more, one wt% or more, 2 wt% or more, 3 wt% or more, 4 wt% or more, 5 wt% or more, 6 wt% or more, 7 wt% or more, 8 wt% or more, 9 wt% or more, 10 wt% or more, 15 wt% or more, 20 wt% or more, even 25 wt% or more while at the same time is typically 30 wt% or less, and can be 25 wt% or less, 20 wt% or less, 15 wt% or less, 10 wt% or less, even 5 wt% or less relative to the combined weight of first, second and third organopolysiloxanes.

The curable composition further comprises a photoinitiator. Photoinitiators are triggered by exposure to light, typically ultraviolet (UV) light, for form radicals that initiate chemical reactions. Examples of suitable photoinitiators include any one or any combination of more than one selected from a group consisting of benzophenone, substituted benzophenones, acetophenone, substituted acetophenone (such as diethoxyacetophenone (DEAP)), benzoin and its alkyl esters (such as benzoin methyl ether, benzoin ethyl ether, and benzoin isopropyl ether), xanthone, and substituted xanthone (such as diethoxyxanthone, chloro-thioxanthone), azo-bisisobutyronitrile, N-methyldiethanolaminebenzophenone, 2-hydroxy-2-methylpropiophenone and bis(2,4,6-trimethylbenzoyl)-phenylphosphine oxide. The photoinitiator can be any one or any combination selected from a group consisting of 2-hydroxy-2-methylpropiophenone and bis(2,4,6-trimethylbenzoyl)-phenylphosphine oxide .

Photoinitiator is present at a concentration of 0.01 wt% or more, and can be present at a concentration of 0.05 wt% or more, 0.1 wt% or more, 0.5 wt% or more, 1.0 wt% or more, 1.25 wt% or more, 1.50 wt% or more, 2.0 wt% or more, even 2.5 wt% or more while at the same time is typically present at a concentration of 5 wt% or less, and can be 4 wt% or less, 3 wt% or less, 2 wt% or less, one wt% or less, or even 0.5 wt% or less relative to curable composition weight.

The curable composition further comprises a condensation catalyst. Suitable moisture cure catalysts include any one or combination of more than one organo-metal catalysts selected from a group consisting of titanium compounds, tin compounds, and zirconium compounds. Examples of suitable titanium compounds include tetra-t-butyl titanate, tetraisopropylorthotitanate, tetrabutoxyorthotitanate, di(isopropoxy)bis(ethylacetoacetate)titanium, di(isopropoxy)bis(methylacetoacetate)titanium, di(isopropoxy)bis(acetylacetonate)titanium and titanium ethyl acetoacetate complex mixed with methyl-trimethoxy silane. Examples of suitable tin compounds include dibutyltin dilaurate and dibutyltin dioctoate. Examples of suitable zirconium compounds include tetra(isopropoxy)zirconium, tetra(n-butoxy)zirconium, tetra(t-butoxy)zirconium, di(isopropoxy)bis(ethylacetoacetate)zirconium, di(isopropoxy)bis(methylacetoacetate)zirconium, and di(isopropoxy)bis(acetylacetonate)zirconium. The condensation catalyst can be any one or any combination selected from a group consisting of tetra-t-butyl titanate and titanium ethyl acetoacetate complex mixed with methyl-trimethoxy silane.

The concentration of condensation catalyst is 0.01 wt% or more, and can be 0.05 wt% or more, 0.10 wt% or more, 0.15 wt% or more, 0.20 wt% or more, 0.30 wt% or more, 0.40 wt% or more, 0.50 wt% or more, 0.60 wt% or more, 0.70 wt% or more, 0.80 wt% or more, 0.90 wt% or more, 1.0 wt% or more, 1.5 wt% or more 2.0 wt% or more, even 2.5 wt% or more while at the same time is typically 3.0 wt% or less, and can be 2.0 wt% or less, 1.5 wt% or less, 1.0 wt% or less, 0.50 wt% or less, 0.10 wt% or less, or even 0.05 wt% or less relative to curable composition weight.

Optionally, the curable composition further comprises an alkoxy silane. The alkoxy silane serves as a reactive diluent, crosslinker and/or moisture scavenger. Alkoxysilanes participate in the curing reaction of the composition and become bound into the resulting cured composition precluding them from being extractible components from the cured reaction.

Desirably, the alkoxy silane is a dialkoxy silane, a trialkoxy silane or a combination of dialkoxy and trialkoxy silanes. Most preferably, the alkoxy silane is a trialkoxy silane.

The alkoxy silane compound desirably has the following structure:

R⁵_{f}Si(OR⁵)_{4-f}

where subscript f is one, two or three (preferably one or two, most preferably one) and R⁵ is independently in each occurrence selected from a group consisting of methyl, ethyl, propyl, and butyl groups. Examples of suitable alkoxy silane compounds include any one or combination of more than one selected from methyltrimethoxy silane, ethyltriethoxy silane, and dimethyldimethoxy silane.

The composition of the present invention can contain zero wt% or more, 0.1 wt% or more, 0.5 wt% or more, one wt% or more, 2 wt% or more, 3 wt% or more, 4 wt% or more, 5 wt% or more, 6 wt% or more, 7 wt% or more 8 wt% or more, even 9 wt% or more, while at the same time typically contains 10 wt% or less, 9 wt% or less, 8 wt% or less, 7 wt% or less, 6 wt% or less, 5 wt% or less, 4 wt% or less, 3 wt% or less, 2 wt% or less, or even one wt% or less of the alkoxy silane compound based on curable composition weight.

### EXAMPLES

Table 1 lists the components for the compositions that follow. Abbreviations are:
First Polyorganosiloxane ("FP"), Second Polyorganosiloxane ("SP"), Third Polyorganosiloxane ("TP"), Photoinitiator ("PI"), Moisture Cure Catalyst ("MCC"), Alkoxy Silane ("AS"), vinyl ("Vi"), and methyl ("Me").

**Table 1**

| **Component** | **Description** | **Source** |
|---|---|---|
| FP-1 | Si(OMe)₃-CH₂CH₂-Me₂Si-Me₂SiO-CH₂CH₂-Me₂SiO-[Me₂SiO]₂₉₀-Me₂Si-CH₂CH₂-Me₂SiO-Me₂Si-CH₂CH₂-Si(OMe)₃ | Prepare as described below |
| FP-2 | Si(OMe)₃-CH₂CH₂-Me₂Si-Me₂SiO-CH₂CH₂-Me₂SiO-[Me₂SiO]₁₄₅-Me₂Si-CH₂CH₂-Me₂SiO-Me₂Si-CH₂CH₂-Si(OMe)₃ | Prepare as described below |
| FP-3 | [(MeO)₃Si-CH₂CH₂-Me₂SiO-Me₂Si-CH₂CH₂-Me₂SiO-(Me₂SiO)_{56.75}]₄Si | Prepare as described below |
| SP-1 | ViMe₂SiO[Me₂SiO]₁₂₁SiMe₂Vi | Available from The Dow Chemical Company under the name DOWSIL^{™} 7038 |
| SP-2 | ViMe₂SiO[Me₂SiO]₇₆₆SiMe₂Vi | Available from The Dow Chemical Company under the name XIAMETER^{™} RBL-9128 |
| SP-3 | ViMe₂SiO[Me₂SiO]₄₉₃SiMe₂Vi | Available from The Dow Chemical Company under the name SILASTIC^{™} SFD 120 |
| SP-4 | [Me₂ViSiO_{1/2}]₄[Me₂SiO_{2/2}]₂₂₇[SiO_{4/2}] | Prepare according to teachings in US6806339 |
| TP-1 | Dimethylsiloxane methyl(3-mercaptopropyl)siloxane having the following average chemical composition: [Me₃SiO]₂[(HS(CH₂)₂CH₂)MeSiO]₅[Me₂SiO]₄₃ | Prepare according to procedures taught in US4780486A |
| PI-1 | 2-hydroxy-2methylpropiophenone | Available from IGM Resins under the name Darocur^{™} 1173 |
| PI-2 | Bis(2,4,6-trimethylbenzoyl)-phenylphosphine oxide | Available from IGM Resins under the name Irgacure^{™} 819 |
| MCC-1 | Tera-t-butyl titanate (TtBT) | Available from Sigma-Aldrich |
| MCC-2 | Titanium ethyl acetoacetate complex mixed with a methyltrimethoxy silane | Available from DuPont under the name Tyzor^{™} PITA-SM |
| AS-1 | Methyltrimethoxy silane | Available from Sigma-Aldrich |
| Karstedt's Catalyst | Platinum (O)-1,3-divinyl-1,1,3,3,-tetramethyldisiloxane complex solution | Available form Sigma-Aldrich |
| ETM Converter | Ethylenetrimethoxysilyl-tetramethyldisiloxane: HMe₂Si-OSiMe₂-CH₂CH₂Si(OMe)₃ | Prepare according to teachings in US4871827 |
| Dual Functional Organopolysiloxane ("DFO") | (MeO)₂ViSiO-[Me₂SiO]₂₀₀-Si(OMe)₂Vi | Prepare according to teaching in US20200207985A1 |
| Precursor A1 | ViMe₂SiO-[Me₂SiO]₂₉₀-SiMe₂Vi | Available from The Dow Chemical Company under the name XIAMETER^{™} RBL-9117 |
| Precursor A2 | ViMe₂SiO-[Me₂SiO]₁₄₅-SiMe₂Vi | Available from The Dow Chemical Company under the name XIAMETER^{™} RBL-9119 |

Tyzor is a trademark of E.I.Du Pont De Nemours and Company. Darocur is a trademark of IGM group B.V. Irgacure is a trademark of BASF SE Company. DOWSIL is a trademark of The Dow Chemical Company. XIAMETER and SILASTIC are trademarks of Dow Corning Corporation.

### Synthesis of FP-1

Combine 50 g of Precursor A1 and 1.19 g of ETM Converter in a 150 milliliter (mL) round flask and agitate for 5 minutes. Add 10 weight parts per million weight parts flask contents of Karstedt's catalyst. Allow the reaction to proceed at 25 degrees Celsius (°C) for 5 hours until infrared spectroscopy reveals disappearance of the SiH peak indicating the reaction is complete.

### Synthesis of FP-2

Combine 50 g of Precursor A2 and 2.33 g of ETM Converter in a 150 milliliter (mL) round flask and agitate for 5 minutes. Add 10 weight parts per million weight parts flask contents of Karstedt's catalyst. Allow the reaction to proceed at 25 degrees Celsius (°C) for 5 hours until infrared spectroscopy reveals disappearance of the SiH peak indicating the reaction is complete.

### Synthesis of FP-3

Combine 50 g of Precursor A3 and 3.08 g of ETM Converter in a 150 milliliter (mL) round flask and agitate for 5 minutes. Add 10 weight parts per million weight parts flask contents of Karstedt's catalyst. Allow the reaction to proceed at 25 degrees Celsius (°C) for 5 hours until infrared spectroscopy shows the reaction is complete by absence of the SiH peak.

### Sample Compositions

Prepare sample compositions according to the formulations in Table 2 where amounts of each component for each formulation are listed in grams (g). Characteristics of the formulations are also in Table 2. Vinyl content is reported as weight percent relative to combined weight of the first, second and third organopolysiloxanes. Evaluations of UV cure provide an indication of whether the sample cures tack-free ("Pass") or not ("Fail") as well as the UV cure depth in millimeters (mm). Characterize UV using the UV Cure Test below. Evaluation of moisture cure determines the time to achieve a tack-free surface in minutes and are evaluated according to the Moisture Cure Test below.

### UV Cure Test

To determine UV cure depth, fill wells of a polytetrafluoroethylene block that are 2.54 centimeters diameter and 20 millimeters deep with a sample and then expose the sample with 4 Joules per square centimeters UV irradiation using Colight UV equipment with a mercury lamp (UVA and UVB). Immediately after exposure, swipe the surface of the coating with a nitril-glove coated finger. If no sample material transfers to the nitrile glove then the coating is deemed "tack free". Remove the sample from the well and gently wipe away any uncured sample with a Kimwipes^{™} brand absorbent tissue (Kimwipe is a trademark of Kimberly0Clark Worldwide, Inc.). Measure the thickness of the cured sample with a ruler to determine cure depth.

### Moisture Cure Test

Draw down onto an FR4 board a 1.27 millimeter (50-mil) thick film of a sample material and allow to cure in a dark room at 22 °C and 35-42% relative humidity. Using a nitrile-glove coated finger periodically swipe the surface of the coating. If sample material transfers to the nitrile glove then the coating is not-tack free. Record the time required for the sample to become tack-free as evidenced by lack of sample material transferring to the nitrile glove.

**Table 2**

| | **Ex 1** | **Ex 2** | **Ex 3** | **Ex 4** | **Ex 5** | **Ex 6** | **Ex 7** | **Ex 8** | **Ex 9** | **Ex 10** | **Ex 11** | **Ex 12** | **Ex 13** | **CE A** | **CE B** | **CE C** | **CE D** | **CE E** | **CE F** |
|---|---|---|---|---|---|---|---|---|---|---|---|---|---|---|---|---|---|---|---|
| FP-1 | 80 | 60 | 50 | 80 | 60 | 80 | 40 | 0 | 60 | 60 | 60 | 0 | 0 | 100 | 90 | 30 | 0 | 0 | 80 |
| FP-2 | 0 | 0 | 0 | 0 | 0 | 0 | 0 | 60 | 0 | 0 | 0 | 0 | 0 | 0 | 0 | 0 | 0 | 0 | 0 |
| FP-3 | 0 | 0 | 0 | 0 | 0 | 0 | 0 | 0 | 0 | 0 | 0 | 60 | 60 | 0 | 0 | 0 | 0 | 0 | 0 |
| SP-1 | 16.3 | 32.5 | 40.7 | 16.3 | 32.5 | 16.3 | 48.8 | 32.5 | 0 | 0 | 0 | 32.5 | 0 | 0 | 8.1 | 56.9 | 81 | 0 | 0 |
| SP-2 | 0 | 0 | 0 | 0 | 0 | 0 | 0 | 0 | 38.8 | 0 | 0 | 0 | 0 | 0 | 0 | 0 | 0 | 0 | 19.4 |
| SP-3 | 0 | 0 | 0 | 0 | 0 | 0 | 0 | 0 | 0 | 38.0 | 0 | 0 | 0 | 0 | 0 | 0 | 0 | 0 | 0 |
| SP-4 | 0 | 0 | 0 | 0 | 0 | 0 | 0 | 0 | 0 | 0 | 32.9 | 0 | 32.9 | 0 | 0 | 0 | 0 | 0 | 0 |
| TP-1 | 3.7 | 7.5 | 9.3 | 3.7 | 7.5 | 3.7 | 11.2 | 7.5 | 1.2 | 2.0 | 7.1 | 7.5 | 7.1 | 0 | 1.9 | 13.1 | 19 | 7.39 | 0.6 |
| DFO | 0 | 0 | 0 | 0 | 0 | 0 | 0 | 0 | 0 | 0 | 0 | 0 | 0 | 0 | 0 | 0 | 0 | 92 | 0 |
| PI-1 | 1 | 1 | 1 | 0.71 | 0.71 | 0.71 | 0.71 | 1 | 1 | 1 | 1 | 1 | 1 | 0 | 1 | 1 | 1 | 0.71 | 1 |
| PI-2 | 0 | 0 | 0 | 0.29 | 0.29 | 0.29 | 0.29 | 0 | 0 | 0 | 0 | 0 | 0 | 0 | 0 | 0 | 0 | 0.29 | 0 |
| AS-1 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| MCC-1 | 0.25 | 0.25 | 0.25 | 0.25 | 0.25 | 0 | 0 | 0.25 | 0.25 | 0.25 | 0.25 | 0.25 | 0.25 | 0.25 | 0.25 | 0.25 | 0.25 | 0 | 0.25 |
| MCC-2 | 0 | 0 | 0 | 0 | 0 | 0.20 | 0.20 | 0 | 0 | 0 | 0 | 0 | 0 | 0 | 0 | 0 | 0 | 0.20 | 0 |

| ***Composition Characteristics*** | | | | | | | | | | | | | | | | | | | |
|---|---|---|---|---|---|---|---|---|---|---|---|---|---|---|---|---|---|---|---|
| SH/Vi mole ratio | 1 | 1 | 1 | 1 | 1 | 1 | 1 | 1 | 1 | 1 | 1 | 1 | 1 | N/A * | 1 | 1 | 1 | 1 | 1 |
| Vinyl Content | 0.10 | 0.20 | 0.25 | 0.1 | 0.2 | 0.1 | 0.3 | 0.2 | 0.034 | 0.053 | 0.19 | 0.20 | 0.19 | 0 | 0.05 | 0.35 | 0.5 | 0.2 | 0.017 |

| ***UV cure*** | | | | | | | | | | | | | | | | | | | |
|---|---|---|---|---|---|---|---|---|---|---|---|---|---|---|---|---|---|---|---|
| Tack-free | Pass | Pass | Pass | Pass | Pass | Pass | Pass | Pass | Pass | Pass | Pass | Pass | Pass | Fail | Fail | Pass | Pass | Pass | Fail |
| Depth | 8 | 12 | 15 | 16 | 18 | 18 | 18 | 12 | 8 | 10 | 12 | 8 | 12 | 0 | 0 | 18 | 18 | 18 | 0 |

| ***Moisture Cure*** | | | | | | | | | | | | | | | | | | | |
|---|---|---|---|---|---|---|---|---|---|---|---|---|---|---|---|---|---|---|---|
| Time (min) | 25 | 35 | 45 | 25 | 35 | 25 | 40 | 40 | 25 | 25 | 20 | 15 | 15 | 40 | 25 | >60 | No Cure | 50 | 25 |

| | | | | | | | | | | | | | | | | | | | |
|---|---|---|---|---|---|---|---|---|---|---|---|---|---|---|---|---|---|---|---|
| *No vinyl component is present | | | | | | | | | | | | | | | | | | | |

## Claims

1. A curable composition comprising:
a. a first organopolysiloxane comprising at least two trialkoxysilyl groups per molecule and that is free of alkenyl groups and mercapto groups, the first organopolysiloxane present at a concentration in a range of 35 to 80 weight-percent based on a combined weight of first, second and third polyorganosiloxanes;
b. a second organopolysiloxane containing at least one alkenyl group and that is free of mercapto groups and alkoxysilyl groups, where the second organopolysiloxane is present at a concentration in a range of 10 to 65 weight-percent and provides a concentration of double bonded carbon groups of more than 0.02 weight-percent, with weight-percent values based on a combined weight of first, second and third polyorganosiloxanes;
c. a third organopolysiloxane comprising on average 2 or more mercapto groups per molecule and that is free of alkenyl functionality and alkoxysilyl functionality, wherein the concentration of the third organopolysiloxane is present at a concentration that is both in a range of 0.5 to 30 weight-percent based on a combined weight of first, second and third polyorganosiloxanes and that is sufficient to provide 0.3 to 4 moles of mercapto groups per mole of alkenyl groups;
d. a photoinitiator at a concentration in a range of 0.01 to 5 weight-percent of curable composition weight;
e. a condensation catalyst at a concentration in a range of 0.01 to 3 weight-percent of curable composition weight; and
f. optionally, alkoxy silane at a concentration in a range of 0.1 to 10 weight-percent of curable composition weight.

2. The curable composition of Claim 1, wherein the first organopolysiloxane is free of (meth)acryl groups.

3. The curable composition of Claim 1, wherein the first organopolysiloxane has an average chemical structure (I):
[XR₂SiO_{1/2}]ₘ[R₂SiO_{2/2}]_{d}[RXSiO_{2/2}]_{d'} [RSiO_{3/2}]ₜ[SiO_{4/2}]_{q} (I)
where:
X is independently in each occurrence selected from trialkoxy silyl containing groups;
R is independently in each occurrence selected from hydrocarbyl groups containing one to 6 carbon atoms;
R' is a an alkylene group having one to 6 carbon atoms;
Subscript m has an average value in a range of 2 to 10;
Subscript d has an average value in a range of 20 to 5000;
Subscript d' has an average value in a range of zero to 50;
Subscript t has an average value of zero to 100; and
Subscript q has an average value of zero to 10.

4. The curable composition of Claim 3, wherein X is selected from:
(RO)₃Si-;
and
(RO)₃Si-R'-R₂SiO-R₂Si-R'-
where R is independently in each occurrence selected from hydrocarbyl groups having one to 6 carbons atoms and R' is independently in each occurrence selected from alkylene groups having one to 6 carbon atoms.

5. The curable composition of any one previous Claim, wherein the second polyorganosiloxane has an average chemical structure (II):
[YR₂SiO_{1/2}]_{m'}[R₂SiO_{2/2}]_{d2}[RYSiO_{2/2}]_{d2'}[RSiO_{3/2}]_{t'}[SiO_{4/2}]_{q'} (II)
where: Y is independently in each occurrence a terminal alkenyl group having from 2 to 8 carbon atoms; R is independently in each occurrence selected from hydrocarbyl groups having one to 6 carbon atoms; subscript m' has an average value in a range of 2 to 10; subscript d2 has an average value in a range of 20 to 5000, subscript d2' has an average value in a range of zero to 50; subscript t' has an average value in a range of zero to 100; and subscript q' has an average value in a range of zero to 10.

6. The curable composition of Claim 5, where each R is methyl, Y is vinyl, subscript m has an average value in a range of 50 to 800, and n is zero.

7. The curable composition of any one previous Claim, wherein the third organopolysiloxane has an average chemical composition (III):
[R₃SiO_{1/2}]₂₋ⱼ[R"R₂Si_{O1/2}]ⱼ[RR"SiO_{2/2}]ₒ[R₂SiO_{2/2}]ₚ (III)
where: R is independently in each occurrence selected from hydrocarbyl groups having one to 6 carbon atoms; R" is HS(CH₂)ₜCH₂- with subscript t having an average value in a range of one to 7; subscript j has an average value in a range of zero to 2; and subscripts o and p are selected so as to provide a wight ratio of mercapto groups that is in a range of 0.5 to 15.0 weight-percent based on weight of the third organopolysiloxane.

8. The curable composition of any one previous Claim, wherein the alkoxy silane is an alkyltrialkoxy silane having an average chemical structure (IV):
R(RO)₃Si (IV)
where: R is independently in each occurrence selected from hydrocarbyl groups having an average of one to 6 carbon atoms.

9. The curable composition of Claim 1, wherein:
a. the first polyorganosiloxane is present at a concentration in a range of 40 to 80 weight-percent of the combined weight of first, second and third polyorganosiloxanes and has an average chemical structure selected from:
X-R₂SiO-[R₂SiO]ₐ₋[RXSiO]_{b}-R₂Si-X (Ia)
where in each occurrence: X is -R'-SiR₂-OSiR₂-R'-Si(OR)₃, R is methyl, R' is -CH₂CH₂-, and wherein subscript a has an average value in a range of 145 to and 290, and subscript b is zero;
and
Si[O-[R₂SiO]ₐ-[RXSiO]₆-R₂Si-X]₄ (Ib)
where in each occurrence: X is (RO)₃Si-R'-R₂SiO-R₂Si-R'-, R is methyl, R' is -CH₂CH₂-, and wherein subscript a has an average value in a range of 55 to 57, and subscript b is zero.
b. the second polyorganosiloxane is present at a concentration in a range of 16 to 50 weight-percent of the combined weight of first, second and third polyorganosiloxanes and has an average chemical structure selected from:
Y-R₂SiO-[R₂SiO]ₘ-[YRSiO]ₙ-R₂SiY (IIa)
where in each occurrence: R is methyl, Y is a vinyl group, subscript m has an average value in a range of 120 to 770, and subscript n zero;
and
Si[-O-[R₂SiO]ₘ-[YRSiO]ₙ- R₂SiY]₄ (IIb)
where in each occurrence: R is methyl, Y is a vinyl group, subscript m has an average value in a range of 55 to 57, and subscript n zero;
c. the third polyorganosiloxane is present at a concentration in a range of one to 10 weight-percent of the combined weight of first, second and third polyorganosiloxanes and has an average chemical composition (IIIa):
[R₃SiO_{1/2}]₂[RR"SiO_{2/2}]ₒ[R₂SiO_{2/2}]ₚ (IIIa)
where: R is methyl in each occurrence, R" is HS(CH₂)₂CH₂-, subscript p has a value in a range of 40 to 45, and subscript o has an average value of 5;
d. the composition comprises photoinitiator;
e. the composition comprises condensation catalyst; and
f. the composition comprises methyltrimethoxysilane as an alkoxysilane.

10. The curable composition of any one previous Claim, wherein the curable composition is free of a polysiloxane that has both alkenyl and alkoxy functionality.

## Patentansprüche

1. Härtbare Zusammensetzung, umfassend:
a. ein erstes Organopolysiloxan, das mindestens zwei Trialkoxysilylgruppen pro Molekül umfasst und frei von Alkenylgruppen und Mercaptogruppen ist, wobei das erste Organopolysiloxan in einer Konzentration in einem Bereich von 35 bis 80 Gewichtsprozent, bezogen auf das Gesamtgewicht des ersten, zweiten und dritten Polyorganosiloxans, vorhanden ist;
b. ein zweites Organopolysiloxan, das mindestens eine Alkenylgruppe enthält und frei von Mercaptogruppen und Alkoxysilylgruppen ist, wobei das zweite Organopolysiloxan in einer Konzentration in einem Bereich von 10 bis 65 Gewichtsprozent vorhanden ist und eine Konzentration an Kohlenstoffgruppen mit Doppelbindung von mehr als 0,02 Gewichtsprozent bereitstellt, wobei die Gewichtsprozentwerte auf dem Gesamtgewicht des ersten, zweiten und dritten Polyorganosiloxans basieren;
c. ein drittes Organopolysiloxan, das im Durchschnitt zwei oder mehr Mercaptogruppen pro Molekül umfasst und frei von Alkenyl- und Alkoxysilyl-Funktionalität ist, wobei die Konzentration des dritten Organopolysiloxans in einem Bereich von 0,5 bis 30 Gewichtsprozent, bezogen auf das Gesamtgewicht des ersten, zweiten und dritten Polyorganosiloxans, liegt und ausreicht, um 0,3 bis 4 Mol Mercaptogruppen pro Mol Alkenylgruppen bereitzustellen;
d. einen Photoinitiator in einer Konzentration in einem Bereich von 0,01 bis 5 Gewichtsprozent des Gewichts der härtbaren Zusammensetzung;
e. einen Kondensationskatalysator in einer Konzentration in einem Bereich von 0,01 bis 3 Gewichtsprozent des Gewichts der härtbaren Zusammensetzung; und
f. optional Alkoxysilan in einer Konzentration im Bereich von 0,1 bis 10 Gewichtsprozent des Gewichts der härtbaren Zusammensetzung.

2. Härtbare Zusammensetzung nach Anspruch 1, wobei das erste Organopolysiloxan frei von (Meth)acrylgruppen ist.

3. Härtbare Zusammensetzung nach Anspruch 1, wobei das erste organopolysiloxan eine durchschnittliche chemische Struktur (I) aufweist:
[XR₂SiO_{1/2}]ₘ[R₂SiO_{2/2}]_{d}[RXSiO_{2/2}]_{d'}[RSiO_{3/2}]ₜ[SiO_{4/2}]_{q} (I)
worin:
X bei jedem Vorkommen unabhängig ausgewählt ist aus Trialkoxysilylhaltigen Gruppen;
R unabhängig bei jedem Auftreten ausgewählt ist aus Kohlenwasserstoffgruppen, die ein bis 6 Kohlenstoffatome enthalten;
R' eine Alkylengruppe mit einem bis 6 Kohlenstoffatomen ist;
Index m einen Durchschnittswert in einem Bereich von 2 bis 10 aufweist;
Index d einen Durchschnittswert in einem Bereich von 20 bis 5000 aufweist;
Index d' einen Durchschnittswert in einem Bereich von Null bis 50 aufweist;
Index t einen Durchschnittswert von Null bis 100 aufweist; und
Index q einen Durchschnittswert von Null bis 10 aufweist.

4. Härtbare Zusammensetzung nach Anspruch 3, wobei X ausgewählt ist aus:
(RO)₃Si-;
und
(RO)₃Si-R' -R₂SiO-R₂Si-R'-
wobei R bei jedem Vorkommen unabhängig aus Kohlenwasserstoffgruppen mit ein bis 6 Kohlenstoffatomen ausgewählt ist und R' bei jedem Vorkommen unabhängig aus Alkylengruppen mit einem bis 6 Kohlenstoffatomen ausgewählt ist.

5. Härtbare Zusammensetzung nach einem der vorstehenden Ansprüche, wobei das zweite Polyorganosiloxan eine durchschnittliche chemische Struktur (II) aufweist:
[YR₂SiO_{1/2}]ₘ[R₂SiO_{2/2}]_{d2}[RYSiO_{2/2}]_{d2'}[RSiO_{3/2}]_{t'}[SiO_{4/2}]_{q} (II)
worin: Y unabhängig bei jedem Vorkommen eine endständige Alkenylgruppe mit 2 bis 8 Kohlenstoffatomen ist; R unabhängig bei jedem Auftreten ausgewählt ist aus Kohlenwasserstoffgruppen, die ein bis 6 Kohlenstoffatome aufweisen; Index m' einen Durchschnittswert in einem Bereich von 2 bis 10 aufweist; Index d2 einen Durchschnittswert in einem Bereich von 20 bis 5000 aufweist, Index d2' einen Durchschnittswert in einem Bereich von Null bis 50 aufweist; Index t' einen Durchschnittswert in einem Bereich von Null bis 100 aufweist; und Index q' einen Durchschnittswert in einem Bereich von Null bis 10 aufweist.

6. Härtbare Zusammensetzung nach Anspruch 5, wobei R jeweils Methyl ist, Y Vinyl ist, der Index m einen Durchschnittswert in einem Bereich von 50 bis 800 aufweist, und n Null ist.

7. Härtbare Zusammensetzung nach einem der vorstehenden Ansprüche, wobei das dritte Organopolysiloxan eine durchschnittliche chemische Struktur (III) aufweist:
[R₃SiO_{1/2}]₂₋ⱼ[R"R₂SiO_{1/2}]ⱼ[RR"SiO_{2/2}]ₒ[R₂SiO_{2/2}]ₚ (III)
worin: R unabhängig bei jedem Vorkommen ausgewählt ist aus Kohlenwasserstoffgruppen, die ein bis 6 Kohlenstoffatome aufweisen; R" HS(CH₂)ₜCH₂- ist, wobei der Index t einen Durchschnittswert in einem Bereich von eins bis 7 aufweist; Index j einen Durchschnittswert in einem Bereich von Null bis 2 aufweist; und die Indizes o und p so ausgewählt werden, dass ein Gewichtsverhältnis der Mercaptogruppen bereitgestellt wird, das in einem Bereich von 0,5 bis 15,0 Gewichtsprozent liegt, basierend auf dem Gewicht des dritten Organopolysiloxans.

8. Härtbare Zusammensetzung nach einem der vorstehenden Ansprüche, wobei das Alkoxysilan ein Alkyltrialkoxysilan mit einer durchschnittlichen chemischen Struktur (IV) ist:
R(RO)₃Si (IV)
worin: R unabhängig bei jedem Vorkommen ausgewählt ist aus Kohlenwasserstoffgruppen, die einen Durchschnitt von einem bis 6 Kohlenstoffatome aufweisen.

9. Härtbare Zusammensetzung nach Anspruch 1, wobei:
a. das erste Polyorganosiloxan in einer Konzentration in einem Bereich von 40 bis 80 Gewichtsprozent des Gesamtgewichts des ersten, zweiten und dritten Polyorganosiloxans vorliegt und eine durchschnittliche chemische Struktur aufweist, die ausgewählt ist aus:
X-R₂SiO-[R₂SiO]ₐ-[RXSiO]_{b}-R₂Si-X (la)
wobei bei jedem Vorkommen: X für -R'-SiR₂-OSiR₂-R'-Si(OR)₃ steht, R für Methyl steht, R' für -CH₂CH₂- steht, und wobei der Index a einen Durchschnittswert in einem Bereich von 145 bis 290 aufweist, und der Index b Null ist;
und
Si[O-[R₂SiO]ₐ-[RXSiO]_{b}-R₂Si-X]₄ (Ib)
wobei bei jedem Vorkommen: X für (RO)₃Si-R'-R₂SiO-R₂Si-R'- steht, R für Methyl steht, R' für -CH₂CH₂- steht, und wobei der Index a einen Durchschnittswert in einem Bereich von 55 bis 57 aufweist, und der Index b Null ist.
b. das zweite Polyorganosiloxan in einer Konzentration in einem Bereich von 16 bis 50 Gewichtsprozent des Gesamtgewichts des ersten, zweiten und dritten Polyorganosiloxans vorliegt und eine durchschnittliche chemische Struktur aufweist, die ausgewählt ist aus:
Y-R₂SiO-[R₂SiO]ₘ-[YRSiO]ₙ-R₂SiY (IIa)
wobei bei jedem Vorkommen: R für Methyl steht, Y für eine Vinylgruppe steht, der Index m einen Durchschnittswert in einem Bereich von 120 bis 770 aufweist, und der Index n Null ist;
und
Si[-O-[R₂SiO]ₘ-[YRSiO]ₙ- R₂SiY]₄ (IIb)
wobei bei jedem Vorkommen: R für Methyl steht, Y für eine Vinylgruppe steht, der Index m einen Durchschnittswert in einem Bereich von 55 bis 57 aufweist, und der Index n Null ist;
c. das dritte Polyorganosiloxan in einer Konzentration in einem Bereich von einem bis 10 Gewichtsprozent des Gesamtgewichts des ersten, zweiten und dritten Polyorganosiloxans vorliegt und eine durchschnittliche chemische Zusammensetzung (Illa) aufweist:
[R₃SiO_{1/2}]₂[RR"SiO_{2/2}]ₒ[R₂SiO_{2/2}]ₚ (IIIa)
worin: R ist bei jedem Vorkommen für Methyl steht, R" für HS(CH₂)₂CH₂-steht, der Index p einen Wert in einem Bereich von 40 bis 45 aufweist, und der Index o einen Durchschnittswert von 5 aufweist;
d. die Zusammensetzung einen Photoinitiator umfasst;
e. die Zusammensetzung einen Kondensationskatalysator umfasst; und
f. die Zusammensetzung Methyltrimethoxysilan als ein Alkoxysilan umfasst.

10. Härtbare Zusammensetzung nach einem der vorstehenden Ansprüche, wobei die härtbare Zusammensetzung frei von einem Polysiloxan ist, das sowohl Alkenyl- als auch Alkoxy-Funktionalität aufweist.

## Revendications

1. Composition durcissable comprenant :
a. un premier organopolysiloxane comprenant au moins deux groupes trialcoxysilyle par molécule et qui est exempt de groupes alcényle et de groupes mercapto, le premier organopolysiloxane étant présent à une concentration comprise dans une plage de 35 à 80 pour cent en poids sur la base d'un poids combiné de premier, deuxième et troisième polyorganosiloxanes ;
b. un deuxième organopolysiloxane contenant au moins un groupe alcényle et qui est exempt de groupes mercapto et de groupes alcoxysilyle, où le deuxième organopolysiloxane est présent à une concentration comprise dans une plage de 10 à 65 pour cent en poids et fournit une concentration en groupes à double liaison carbone supérieure à 0,02 pour cent en poids, les valeurs de pourcentage en poids étant basées sur un poids combiné de premier, deuxième et troisième polyorganosiloxanes ;
c. un troisième organopolysiloxane comprenant en moyenne 2 groupes mercapto par molécule ou plus et qui est exempt de fonctionnalité alcényle et de fonctionnalité alcoxysilyle, dans laquelle la concentration en troisième organopolysiloxane est présent à une concentration qui est à la fois comprise dans une plage de 0,5 à 30 pour cent en poids sur la base d'un poids combiné de premier, deuxième et troisième polyorganosiloxanes et qui est suffisante pour fournir de 0,3 à 4 moles de groupes mercapto par mole de groupes alcényle ;
d. un photo-initiateur à une concentration comprise une plage de 0,01 à 5 pour cent en poids du poids de composition durcissable ;
e. un catalyseur de condensation à une concentration comprise dans une plage de 0,01 à 3 pour cent en poids du poids de composition durcissable ; et
f. facultativement, un alcoxy silane à une concentration comprise dans une plage de 0,1 à 10 pour cent en poids du poids de composition durcissable.

2. Composition durcissable selon la revendication 1, dans laquelle le premier organopolysiloxane est exempt de groupes (méth)acryliques.

3. Composition durcissable selon la revendication 1, dans laquelle le premier organopolysiloxane a une structure chimique moyenne (I) :
[XR₂SiO_{1/2}]ₘ[R₂SiO_{2/2}]_{d}[RXSiO_{2/2}]_{d'}[RSiO_{3/2}]ₜ[SiO_{4/2}]_{q} (1)
où :
X est choisi indépendamment, dans chaque cas, parmi des groupes à teneur en trialcoxy silyle ;
R est choisi indépendamment, dans chaque cas, choisi parmi des groupes hydrocarbyle contenant de un à 6 atomes de carbone ;
R' est un groupe alkylène ayant de un à 6 atomes de carbone ;
l'indice m a une valeur moyenne comprise dans une plage de 2 à 10 ;
l'indice d a une valeur moyenne comprise dans une plage de 20 à 5 000 ;
l'indice d' a une valeur moyenne comprise dans une plage de zéro à 50 ;
l'indice t a une valeur moyenne de zéro à 100 ; et
l'indice q a une valeur moyenne de zéro à 10.

4. Composition durcissable selon la revendication 3, dans laquelle X est choisi parmi :
(RO)₃Si- ;
et
(RO)₃Si-R'-R₂SiO-R₂Si-R'-
où R est choisi indépendamment, dans chaque cas, parmi des groupes hydrocarbyle ayant de un à six atomes de carbone et R' est choisi indépendamment, dans chaque cas, parmi des groupes alkylène ayant de un à 6 atomes de carbone.

5. Composition durcissable selon l'une quelconque revendication précédente, dans laquelle le deuxième polyorganosiloxane a une structure chimique moyenne (II) :
[YR₂SiO_{1/2}]_{m'}[R₂SiO_{2/2}]_{d2}[RYSiO_{2/2}]_{d2'}[RSiO_{3/2}]_{t'}[SiO_{4/2}]_{q'} (II)
où : Y est indépendamment, dans chaque cas, un groupe alcényle terminal ayant de 2 à 8 atomes de carbone ; R est choisi indépendamment, dans chaque cas, parmi des groupes hydrocarbyle ayant de un à 6 atomes de carbone ; l'indice m' a une valeur moyenne comprise dans une plage de 2 à 10 ; l'indice d2 a une valeur moyenne comprise dans une plage de 20 à 5000, l'indice d2' a une valeur moyenne comprise dans une plage de zéro à 50 ; l'indice t' a une valeur moyenne comprise dans une plage de zéro à 100 ; et l'indice q' a une valeur moyenne comprise dans une plage de zéro à 10.

6. Composition durcissable selon la revendication 5, où chaque R est méthyle, Y est vinyle, l'indice m a une valeur moyenne comprise dans une plage de 50 à 800, et n vaut zéro.

7. Composition durcissable selon l'une quelconque revendication précédente, dans laquelle le troisième organopolysiloxane a une composition chimique moyenne (III) :
[R₃SiO_{1/2}]₂₋ⱼ[R"R₂SiO_{1/2}]ⱼ[RR"SiO_{2/2}]ₒ[R₂SiO_{2/2}]ₚ (III)
où : R est choisi indépendamment, dans chaque cas, parmi des groupes hydrocarbyle ayant de un à 6 atomes de carbone ; R" est HS(CH₂)ₜCH₂-, l'indice t ayant une valeur moyenne comprise dans une plage de un à 7 ; l'indice j a une valeur moyenne comprise dans une plage de zéro à 2 ; et les indices o et p sont choisis de manière à obtenir un rapport en poids de groupes mercapto qui est compris dans une plage de 0,5 à 15,0 pour cent en poids, sur la base du poids du troisième organopolysiloxane.

8. Composition durcissable selon l'une quelconque revendication précédente, dans laquelle l'alcoxy silane est un alkyltrialcoxy silane ayant une structure chimique moyenne (IV) :
R(RO)₃Si (IV)
où : R est choisi indépendamment, dans chaque cas, parmi des groupes hydrocarbyle ayant en moyenne de un à 6 atomes de carbone.

9. Composition durcissable selon la revendication 1, dans laquelle :
a. le premier polyorganosiloxane est présent à une concentration comprise dans une plage de 40 à 80 pour cent en poids du poids combiné de premier, deuxième et troisième polyorganosiloxanes et a une structure chimique moyenne choisie parmi :
X-R₂SiO-[R₂SiO]ₐ-[RXSiO]_{b}-R₂Si-X (la)
où, dans chaque cas : X est -R'-SiR₂-OSiR₂-R'-Si(OR)₃, R est méthyle, R' est -CH₂CH₂-, et dans laquelle l'indice a a une valeur moyenne comprise dans une plage de 145 à 290, et l'indice b vaut zéro ;
et
Si[O-[R₂SiO]ₐ-[RXSiO]_{b}-R₂Si-X]₄ (Ib)
où, dans chaque cas : X est (RO)₃Si-R'-R₂SiO-R₂Si-R'-, R est méthyle, R' est -CH₂CH₂-, et dans laquelle l'indice a a une valeur moyenne comprise dans une plage de 55 à 57, et l'indice b vaut zéro.
b. le deuxième polyorganosiloxane est présent à une concentration comprise dans une plage de 16 à 50 pour cent en poids du poids combiné de premier, deuxième et troisième polyorganosiloxanes et a une structure chimique moyenne choisie parmi :
Y-R₂SiO-[R₂SiO]ₘ-[YRSiO]ₙ-R₂SiY (IIa)
où, dans chaque cas : R est méthyle, Y est un groupe vinyle, l'indice m a une valeur moyenne comprise dans une plage de 120 à 770, et l'indice n vaut zéro ;
et
Si[-O-[R₂SiO]ₘ-[YRSiO]ₙ-R₂SiY]₄ (IIb)
où, dans chaque cas : R est méthyle, Y est un groupe vinyle, l'indice m a une valeur moyenne comprise dans une plage de 55 à 57, et l'indice n vaut zéro ;
c. le troisième polyorganosiloxane est présent à une concentration comprise dans une plage de un à 10 pour cent en poids du poids combiné de premier, deuxième et troisième polyorganosiloxanes et a une composition chimique moyenne (IIIa) :
[R₃SiO_{1/2}]₂[RR"SiO_{2/2}]ₒ[R₂SiO_{2/2}]ₚ (IIIa)
où : R est méthyle dans chaque cas, R" est HS(CH₂)₂CH₂-, l'indice p a une valeur comprise dans une plage de 40 à 45, et l'indice o a une valeur moyenne de 5 ;
d. la composition comprend un photo-initiateur ;
e. la composition comprend un catalyseur de condensation ; et
f. la composition comprend du méthyltriméthoxysilane en tant qu'alcoxysilane.

10. Composition durcissable selon l'une quelconque revendication précédente, dans laquelle la composition durcissable est exempte d'un polysiloxane qui a à la fois une fonctionnalité alcényle et alcoxy.
